# EUROPÄISCHE PATENTSCHRIFT

(11) **EP 2 053 179 B1**
(45) Veröffentlichungstag und Bekanntmachung des Hinweises auf die Patenterteilung: **15.04.2015**
(21) Anmeldenummer: 08018441.9
(22) Anmeldetag: 22.10.2008
(51) Int. Cl.: E04F 13/08, F16B 13/00

(54) **Dämmstofhalter**
Fixing element for insulating material
Dispositif pour la fixation de matériaux isolants

(30) Priorität: 26.10.2007 DE 202007014916 U
(43) Veröffentlichungstag der Anmeldung: 29.04.2009
(73) Patentinhaber: KEW Kunststofferzeugnisse GmbH Wilthen, 02681 Wilthen (DE)
(72) Erfinder: Mager, Heiko, 01904 Neukirch (DE); Steglich, Maik, 02681 Schirgiswalde (DE); Gedan, Eberhard, 02689 Sohland (DE)
(74) Vertreter: Sperling, Thomas

(56) Entgegenhaltungen:
- EP-A- 0 074 469
- EP-A- 0 765 979
- WO-A-02/068832
- DE-C1- 19 801 548
- DE-U1- 20 103 427
- DE-U1-202005 002 534
- DE-U1-202007 014 916

## Beschreibung

Die Erfindung betrifft einen Dämmstoffhalter 1, umfassend einen Dübel 10 mit einem Dübelschaft 11, an dessen einem Ende ein Spreizbereich S ausgebildet ist und an dessen anderem Ende eine flanschartige Druckplatte 1 angeformt ist, wobei die flanschartige Druckplatte 13 einen koaxial zur Längsachse X ausgebildeten Aufnahmeteil 14 aufweist, und ein Spreizelement 20 mit einem Kopf 21 und einem Schaft 22, und einen Übertragungskörper 30, der einen seitlichen T-förmigen Einsteckbereich mit einem Einsteckschlitz 32s und einem in den Übertragungskörper 30 übergehenden Aufnahmeraum 32 für den Kopf 21 enthält, und wobei an der dem Schaft 22 abgewandten Seite des Kopfes 21 des Spreizelementes 20 ein axial vorstehender Kamm 23 angeformt ist, und wobei im Inneren des Aufnahmeraumes 32 ein den Kamm 23 aufnehmender quer zur Längsachse X des Übertragungskörpers 30 verlaufender Übertragungsbereich 34 ausgebildet ist zum Zwecke einer drehfesten Verbindung zwischen dem Übertragungskörper 30 und dem Spreizelement 20.

Zur Befestigung von wärme- und/oder schallisolierenden Platten und Dämmelementen an Außenmauern sind verschiedene Befestigungsvorrichtungen, Befestigungselemente, Dübel in vielfältiger Konstruktion bekannt, die den metallischen Spreizstift vor Korrosion schützen sollen. Des Weiteren sollen die zur Verfügung gestellten Befestigungselemente keine wärmeleitenden Brücken bilden, um die durch die Dämmelemente erzielte Wärmedämmung nicht zu gefährden, was insbesondere bei Außenwandmontagen problematisch ist. Ferner ist eine hohe Auszugssicherheit bzw. Ausdrehsicherheit der Befestigungselemente gegen dessen Herausziehen oder Herausdrehen zu gewährleisten.

Beispielsweise ist aus der EP 0 074 469 A ein Befestigungselement für die Befestigung von wärme- und schallisolierenden Materialien der gattungsgemäßen Art bekannt, bei dem der Kopf des als Spreizstift dienenden Nagels mit einem Kunststoffmantel überzogen ist, um ihn vor Korrosion zu schützen und eine Wärmebrücke zu vermeiden.

Die EP 0 765 979 A beschreibt ein weiteres Befestigungselement der gattungsgemäßen Art, das gegenüber dem aus der EP 0 074 469 bekannten Befestigungselement in bezug auf die Verringerung der Verluste durch Wärmedämmung verbessert ist, indem die Kunststoffummantelung des Kopfes des Nagels so ausgebildet wird, dass eine radiale Abdichtung zwischen dem kunststoffummantelten Kopf und der Innenwand der Ausnehmung des Dübels im Bereich des äußeren Kopfendes entsteht, wodurch die Bildung einer Kälte-Wärme-Brücke zwischen dem metallischen Nagel und der Umgebung wirksam unterdrückt wird. Der ummantelte Kopf weist eine im Wesentlichen vom äußeren Kopfende nach innen verlaufende sich verjüngende Gestalt auf.

Aus der DE 201 03 427 geht ein Dämmstoffhalter hervor, der einen Dübel mit einem Dübelschaft mit axialem Durchgang enthält, an dessen einem Ende ein Spreizbereich ausgebildet ist und an dessen anderem Ende ein Aufnahmeteil mit einem gegenüber dem Dübelschaft erweiterten Aufnahmeraum und eine flanschartige Druckplatte angeformt sind. Des Weiteren umfasst der Dämmstoffhalter einen zur Aufweitung des Spreizbereiches in den Dübel einführbaren langen Nagel mit einem Kopf und einer auf den Kopf des Nagels aufsteckbar ausgebildeten Einschlagkappe. Die Einschlagkappe ist der Gestalt konstruiert, dass eine mechanisch lösbare Verbindung zwischen dem Nagel und der Einschlagkappe gegeben ist. Diese Schrift offenbart den oberbegriff des Anspruchs 1.

Die EP 1 366 303 offenbart einen Dämmstoffhalter zur Befestigung von Isolations- und Dämmelementen an einem Untergrund, umfassend einen Dübel mit einem Dübelschaft mit axialem Durchgang, an dessen einem Ende ein Spreizbereich ausgebildet ist und an dessen anderem Ende eine flanschartige Druckplatte angeformt ist, und wobei im Übergang von der flanschartigen Druckplatte zum Dübelschaft ein erweiterter Schaftteil mit einem koaxialen zur Längsachse des Dübels ausgebildeten Aufnahmeraum mit gegenüber dem axialen Durchgang vergrößertem Durchmesser ausgebildet ist, wodurch eine den axialen Durchgang umgebende ringförmige Auflagerfläche gebildet ist, und einen zur Aufweitung des Spreizbereiches in den Dübel einführbaren Nagel mit einem Nagelschaft und einem Kopf, wobei der Kopf des Nagels in den Aufnahmeraum des Dübels einsetzbar ist und zwecks Ausfüllens des Aufnahmeraumes mit einer Kappe aus Kunststoff versehen ist.

Das Gebrauchsmuster 20 2005 002 534 betrifft einen Dämmstoffhalter zum Anbringen von Isolierplatten an einem tragenden Untergrund, mit einem die Isolierplatte durchsetzenden hülsenförmigen Halterschaft, an dessen Ende ein die Außenseite der Isolierplatte übergreifender Halterteller angeformt ist und mit einem in den Halterschaft einführbaren zweistückigen Halteranker, bestehend aus einem Anker und einer Ankerverlängerung, wobei der Anker und die Ankerverlängerung über eine Kupplung drehfest miteinander verbunden sind.

Der Erfindung liegt die Aufgabe zugrunde, einen Dämmstoffhalter der eingangs genannten Art dahingehend weiterzubilden, dass sowohl ein Eindrehen als auch ein Einschlagen eines Spreizelementes in den Dübel mittels eines Werkzeuges möglich ist. Des Weiteren soll der Dämmstoffhalter keine wärmeleitenden Brücken bzw. Kältebrücken bilden und das Spreizelement dauerhaft vor eindringender Feuchtigkeit schützen. Ferner soll der Dämmstoffhalter eine leichte Montage ermöglichen und kostengünstig sowie materialsparend herstellbar sein.

Diese Aufgabe wird erfindungsgemäß durch einen Dämmstoffhalter 1 gemäß den Merkmalen des Anspruches 1 gelöst.

Vorteilhafte Weiterbildungen und Ausgestaltungen der Erfindung sind in den kennzeichnenden Merkmalen der Unteransprüche, den Zeichnungen und den Ausführungsbeispielen angegeben.

Der Dämmstoffhalter gemäß Anspruch 1 zeichnet sich dadurch aus, dass an der dem Schaft 22 abgewandten Seite des Kopfes 21 des Spreizelementes 20 ein axial vorstehender Kamm 23 angeformt ist, und wobei im Inneren des Aufnahmeraumes 32 ein den Kamm 23 aufnehmender quer zur Längsachse X des Übertragungskörpers 30 verlaufender Übertragungsbereich 34 ausgebildet ist zum Zwecke einer drehfesten Verbindung zwischen dem Übertragungskörper 30 und dem Spreizelement 20. Die geschaffene kraft- und formschlüssige Verbindung zwischen dem Übertragungskörper und dem Spreizelement ermöglicht sowohl ein Eindrehen als auch ein Einschlagen eines Spreizelementes in den Dübel mittels eines Eindreh- bzw. Einschlagwerkzeuges mit hoher Auszugssicherheit bzw. Ausdrehsicherheit gegen dessen Herausziehen oder Herausdrehen.

Der im Inneren des Aufnahmeraumes quer zur Längsachse X des Übertragungskörpers verlaufende Übertragungsbereich ist tiefer als die Höhe des axial vorstehenden Kammes ausgebildet, wodurch eine kammfreie Zone am geschlossenen Ende der Übertragungsaussparung in Richtung der Längsachse X entsteht, die der Stabilisierung des Übertragungskörpers und besseren Verteilung der auf den Übertragungskörper wirkenden Kräfte dient.

In einer Weiterbildung weist der Übertragungskörper an seinem einen axialen Ende innere und/oder äußere Umfangs-Profilierungen für einen Werkzeugangriff auf, wodurch ein schnelles Eindrehen des Spreizelementes mittels eines Eindrehwerkzeuges in den Dübel zwecks Aufspreizen des Spreizbereiches und Verankerung des Dübels in einem Untergrund gegeben ist. Hierbei kann das Eindrehwerkzeug praxisbezogen für einen Innenangriff oder einen Außenangriff ausgewählt werden.

In einer bevorzugten Ausführungsform sind der Übertragungskörper und der Aufnahmeteil im Wesentlichen kegelstumpfförmig ausgebildet, woraus eine verbesserte Abdichtung resultiert.

In einer besonders bevorzugten Ausführungsform weist der Übertragungskörper oberhalb der kammfreien Zone eine sich axial erstreckende konische Dichtfläche auf, und wobei an dem Aufnahmeteil eine innere konische Dichtfläche ausgebildet ist, woraus eine hohe Dichtigkeit der formschlüssig aneinander liegenden Dichtflächen resultiert und damit ein optimaler Schutz des Spreizelementes gegen Witterungseinflüsse, wie Spritzwasser gegeben ist.

In einer weiteren bevorzugten Ausführung ist auf der konischen Dichtfläche des Übertragungskörpers eine radial verlaufende Dichtwulst oder eine radial verlaufende Schneidringdichtfläche ausgebildet, woraus infolge der Flächenpressung eine hohe Abdichtung und ein dauerhafter Schutz des Spreizelementes, beispielsweise gegenüber Feuchtigkeit erreichbar ist.

Die Erfindung schlägt ferner vor, auf der inneren konischen Dichtfläche des Aufnahmeteiles eine radial verlaufende Dichtwulst oder eine radial verlaufende Schneidringdichtfläche vorzusehen, so dass ein dauerhafter Schutz des Spreizelementes vor eindringender Feuchtigkeit gegeben ist

In vorteilhafter Weise weisen die konische Dichtfläche des Übertragungskörpers und die innere konische Dichtfläche des Aufnahmeteiles einen identischen konischen Neigungswinkel in Bezug auf die X-Achse auf, so dass beide Dichtflächen einen entsprechend großen Bereich abdecken bzw. einnehmen.

Idealer Weise liegt der Neigungswinkel zwischen 20° und 40°.

In einer weiteren vorteilhaften Ausgestaltung der Erfindung ist an der Innenseitenwand des Übertragungskörpers und/oder an der Innenseitenwand des Schaftes mindestens ein nach innen vorstehendes sich in axialer Richtung erstreckendes Rastelement ausgebildet, woraus ein fester und sicherer Sitz des Spreizelementes in dem Übertragungskörper und dem Schaft resultieren.

Die Erfindung wird anhand von Ausführungsbeispielen und den Zeichnung näher erläutert. Es zeigen:
- Figur 1a: eine Ansicht des erfindungsgemäßen Dämmstoffhalters mit partiell eingestecktem Spreizelement mit Übertragungskörper
- Figur 1b: einen Längsschnitt A-A von Figur 1a
- Figur 2: eine perspektivische Teilschnittdarstellung nach Figur 1a
- Figur 3: eine perspektivische Ansicht des Übertragungskörpers in vergrößerter Form
- Figur 4: eine Ansicht nach Figur 3
- Figur 4a: einen Längsschnitt B-B von Figur 3
- Figur 4b: einen Querschnitt C-C von Figur 4
- Figur 4c: ein Detail D von Figur 4b
- Figur 5: ein Spreizelement mit an seinem Kopf angeformten Kamm
- Figur 6: eine perspektivische Darstellung des Spreizelementes mit Übertragungskörper
- Figur 7: eine perspektivische Darstellung des Übertragungskörpers in vergrößerter Form
- Figur 7a: eine perspektivische Ansicht des Übertragungskörpers mit einer konischen Dichtfläche und einer Dichtwulst
- Figur 7b: eine perspektivische Ansicht des Übertragungskörpers mit einer konischen Dichtfläche und einer Schneidringdichtfläche
- Figur 7c: eine perspektivische Darstellung des Übertragungskörpers mit einem im Übertragungskörper und im Schaft angeordneten Rastelement
- Figur 8: einen Querschnitt Detail G der aneinander liegenden Dichtflächen von Übertragungskörper und Aufnahmeteil
- Figur 9a: einen Querschnitt des Aufnahmeteiles mit einer inneren konischen Dichtfläche und einer Dichtwulst
- Figur 9b: einen Querschnitt des Aufnahmeteiles mit einer inneren konischen Dichtfläche und einer Schneidringfläche

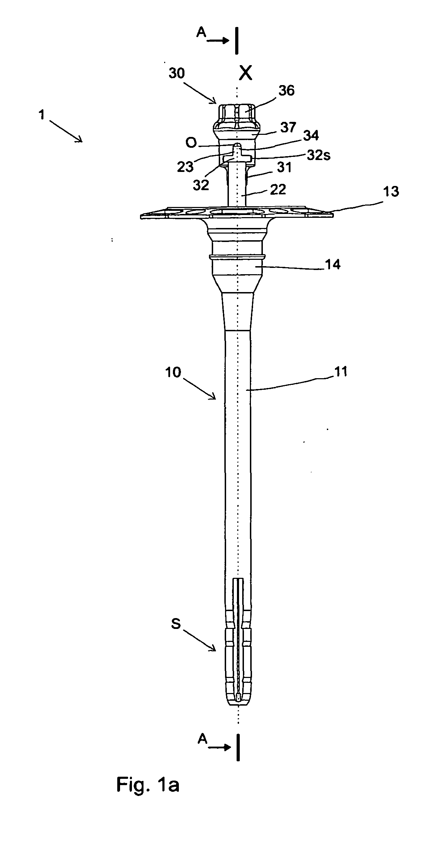

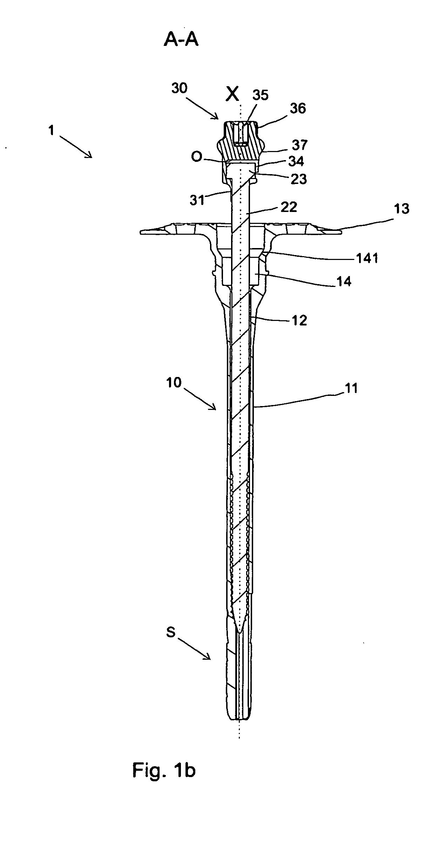

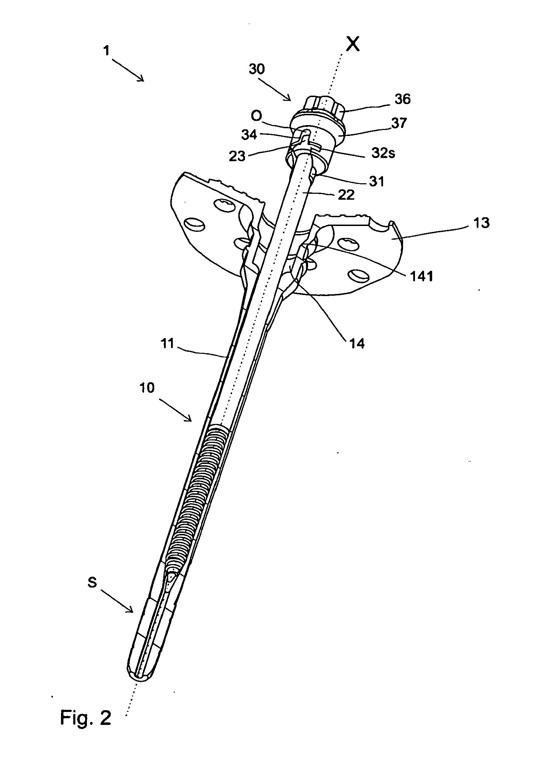

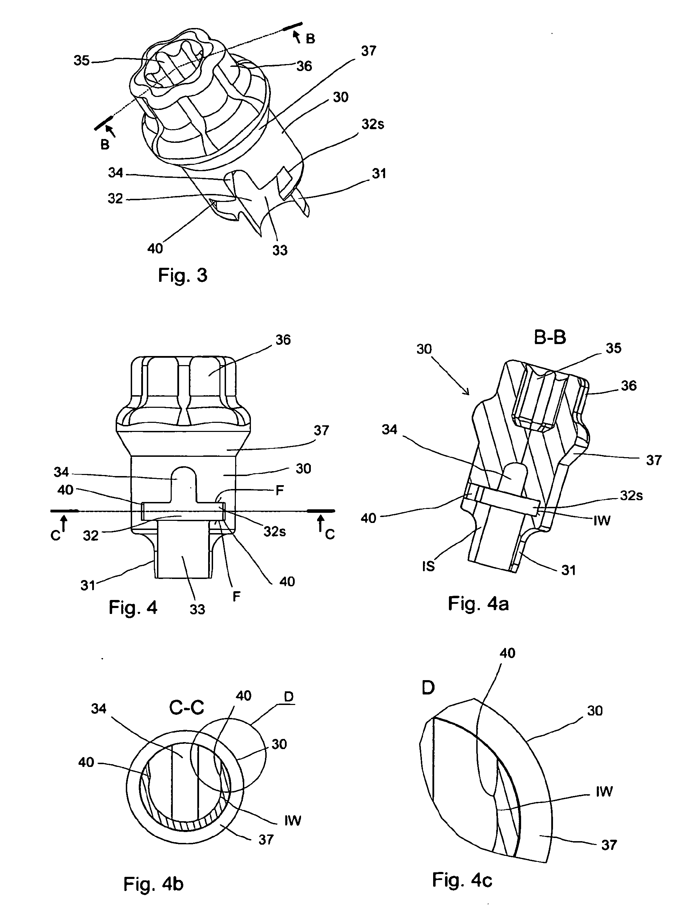

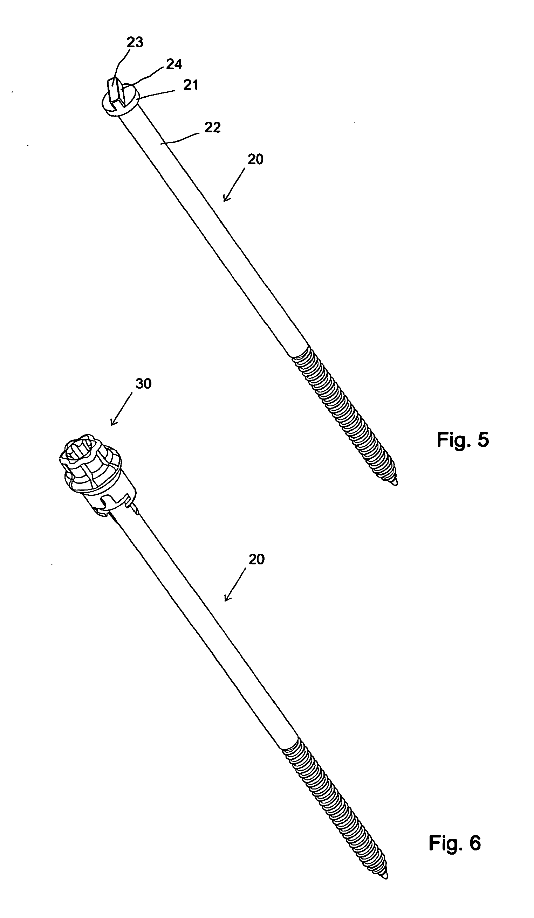

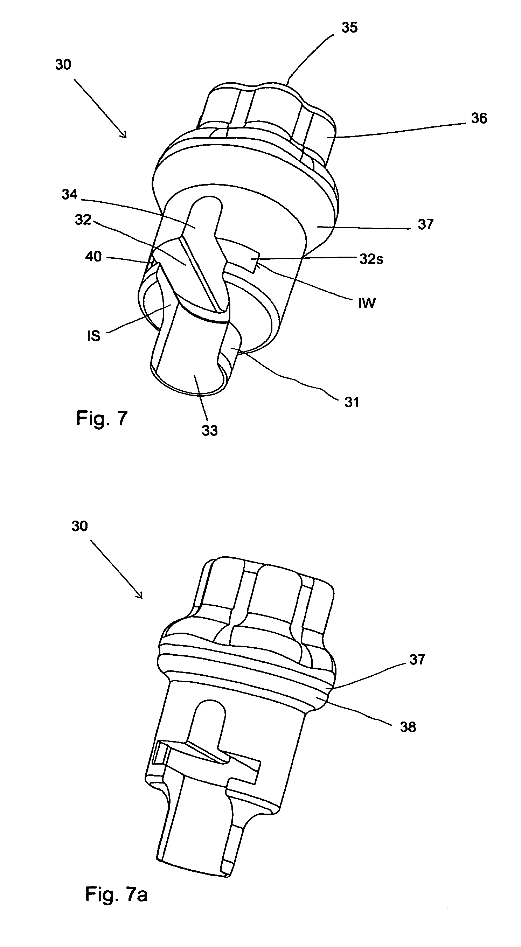

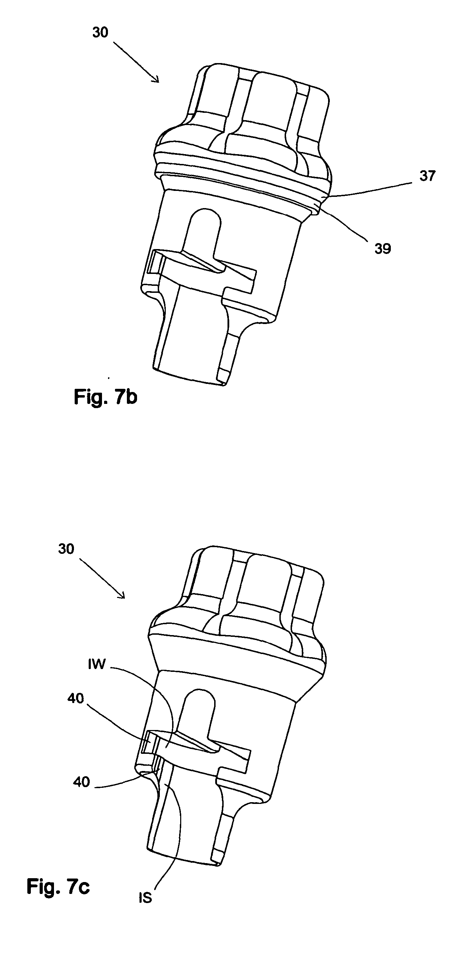

Der Dämmstoffhalter 1 gemäß Fig. 1a bis Fig. 9b ist mehrteilig ausgebildet und umfasst nach Fig. 1 einen Dübel 10 mit einem Dübelschaft 11, ein in den Dübel 10 einführbares Spreizelement 20 und einen auf das Spreizelement 20 aufsteckbaren Übertragungskörper 30. Der Dübelschaft 11 weist einen in Längserstreckung X verlaufenden axialen Durchgang 12 durch den Dübel 10 auf. An dem einen Ende des Dübels 10 ist ein Spreizbereich S, der durch das eingeführte Spreizelement 20 aufspreizbar ist zwecks Verankerung des Dübels 10 in einem nicht dargestellten Untergrund, ausgebildet. An dem anderen Ende des Dübels 10 ist eine flanschartige Druckplatte 13 angeformt, die einen koaxial zur Längsachse X ausgebildeten Aufnahmeteil 14 aufweist, der zur Aufnahme des Übertragungskörpers 30 dient. Anstelle der Druckplatte 13 kann auch ein topfförmiger verbreiterter Kopf als Halteelement angeformt sein. Das Spreizelement 20 ist gemäß Fig. 2, Fig. 5 und Fig. 6 nach Art einer Schraube mit einem scheibenförmigen bzw. tellerförmigen Kopf 21 und einem Schaft 22 ausgebildet. Auf der dem Schaft 22 abgewandten Seite des Kopfes 21 des Spreizelementes 20 ist nach Fig. 5 ein axial vorstehender Kamm 23 angeformt. Der Kamm 23 ist durchgängig klingenförmig gestaltet. Hierbei bewirken die einander gegenüberliegenden Anlageflächen 24 des Kammes 23 einen vollflächigen Kontakt mit dem Übertragungskörper 30 zur Übertragung einer Drehbewegung bzw. eines Drehmomentes von dem Übertragungskörper 30 auf das Spreizelement 20. Der Spreizstift 20 ist aus Metall gefertigt und kann auch aus Kunststoff hergestellt sein. Des Weiteren weist der Übertragungskörper 30 einen Schaftteil 31 und einen einseitig offenen T-förmigen Einsteckbereich auf, der einen seitlichen Einsteckschlitz 32s und einen in den Übertragungskörper 30 übergehenden Aufnahmeraum 32 für den Kopf 21 und einen durch den Schaftteil 31 durchgängigen in axialer Richtung verlaufenden kanalartigen Längsschlitz 33 für das Spreizelement 20 enthält. Im Inneren des Aufnahmeraumes 32 ist ein quer zur Längsachse X des Übertragungskörpers 30 verlaufender Übertragungsbereich 34 ausgebildet (s. Fig. 1a, Fig. 1b, Fig. 7), d.h. der Aufnahmeraum 32 erweitert sich zu einem Übertragungsbereich 34. Dieser Übertragungsbereich 34 des Übertragungskörpers 30 dient der Aufnahme bzw. Versenkung des Kammes 23 zum Zwecke einer drehfesten kraft- und formschlüssigen Verbindung zwischen dem Übertragungskörper 30 und dem Spreizelement 20. Gemäß Fig. 1a, Fig. 1b, Fig. 2 ist der Übertragungsbereich 34 im Inneren des Aufnahmeraumes 32 des Übertragungskörpers 30 tiefer als die Höhe des auf der dem Schaft 22 abgewandten Oberseite des Kopfes 21 des Spreizelementes 20 angeformten Kammes 23 ausgebildet, wodurch eine kammfreie abgerundete Zone O am geschlossenen Ende des Übertragungsbereiches 34 in Richtung der Längsachse X entsteht, die eine bessere Kräfteverteilung auf den Übertragungskörper 30 ermöglicht und ihn zusätzlich stabilisiert. Nach Fig. 4 bis Fig. 4c sind an der Innenseitenwand IW des Übertragungskörpers 30 und und/oder an der Innenseitenwand IS des Schaftteiles 31 zwei sich in axialer Richtung erstreckende Rastelemente 40 ausgebildet, die einen sicheren und festen Sitz des Spreizelementes 20 in dem Übertragungskörper 30 und in dem Schaftteil 31 gewährleisten. Vorzugsweise sind die Rastelemente 40 im Bereich des seitlichen Einsteckschlitzes 32 angeformt und werden begrenzt von der oberen und unteren Fläche F des Aufnahmeraumes 32. Ferner weist der Übertragungskörper 30 an seinem einen axialen Ende innere und/oder äußere Umfangs-Profilierungen 35, 36 für einen Werkzeugangriff auf zum Zwecke der Übertragung eines Drehmomentes bzw. einer Drehbewegung von dem Werkzeug auf den Übertragungskörper 30. Die inneren Umfangs-Profilierungen 35 sind als Innenangriff für ein Werkzeug, wie Innensechsrundschraubendreher und die äußeren Umfangs-Profilierungen 36 für einen Außenangriff als Sechskant- bzw. Sechsrund konstruiert (s. Fig. 1b, Fig. 3). Das Eindrehwerkzeug ist somit wahlweise manuell oder als elektrisch angetriebenes Werkzeug sowohl am Außenumfang als auch im Inneren des Übertragungskörpers 30 einsetzbar und steht mit dem Übertragungskörper 30 in einem festen Eingriff. Zur Verbesserung der Abdichtung sind der Übertragungskörper 30 und der Aufnahmeteil 14 im Wesentlichen kegelstumpfförmig ausgebildet.

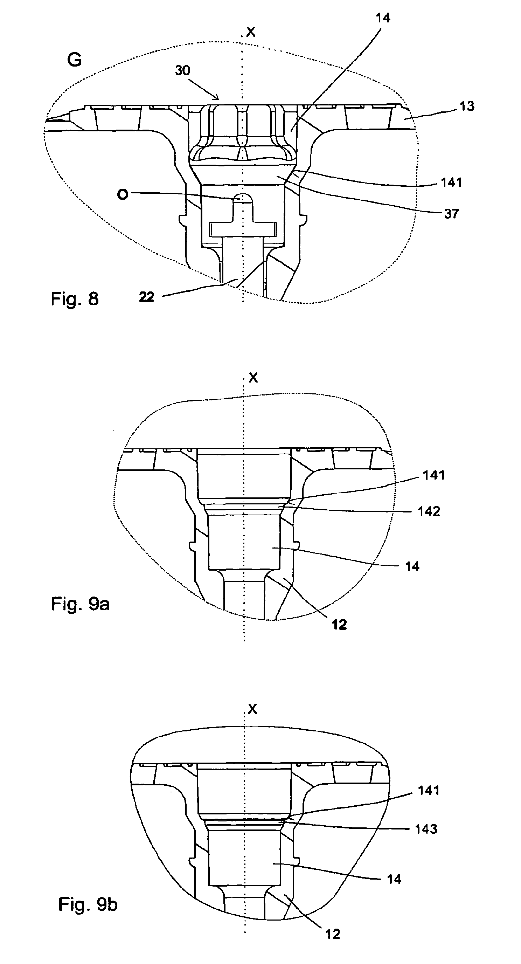

In einer besonders bevorzugten Ausführungsform gemäß Fig. 1a, Fig. 3 weisen der Übertragungskörper 30 und der Aufnahmeteil 14 eine sich ergänzende konische Form auf, wobei an dem Übertragungskörper 30 oberhalb der kammfreien Zone O eine sich axial erstreckende konische Dichtfläche 37 und an dem Aufnahmeteil 14 eine innere konische Dichtfläche 141 ausgebildet ist. Durch die Konizität der Dichtflächen 37 / 141 wird beim Eindrehen des Spreizelementes 20 eine Erhöhung der Flächenpressung der beiden Dichtflächen 37 / 141 geschaffen. Die Dichtflächen 37 / 141 liegen im eingedrehten Zustand des Spreizelementes 20 formschlüssig aneinander an und ermöglichen eine hohe Dichtigkeit bzw. Abdichtung, so dass ein optimaler Schutz des Spreizelementes 20 gegen Witterungseinflüsse, wie Spritzwasser gegeben ist (s. Fig. 8).

Eine weitere Ausführungsform der Erfindung sieht nach Fig. 7a vor, auf der konischen Dichtfläche 37 des Übertragungskörpers 30 zusätzlich eine radial verlaufende Dichtwulst 38 oder nach Fig. 7b eine radial verlaufende Schneidringdichtfläche 39 auszubilden und auf der inneren konischen Dichtfläche 141 des Aufnahmeteiles 14 gemäß Fig. 9a eine radial verlaufende Dichtwulst 142 oder gemäß Fig. 9b eine radial verlaufende Schneidringdichtfläche 143 vorzusehen, die die Abdichtung zwischen dem Übertragungskörper 30 und dem Dübel 10 infolge der hohen Flächenpressung weiter verbessert und einen dauerhaften Schutz des Spreizelementes 20, beispielsweise gegenüber Feuchtigkeit ermöglicht.

In vorteilhafter Weise weisen die konische Dichtfläche 37 des Übertragungskörpers 30 und die innere konische Dichtfläche 141 des Aufnahmeteiles 14 einen identischen konischen Neigungswinkel α in Bezug auf die X-Achse auf, so dass beide Dichtflächen einen entsprechend großen Bereich abdecken bzw. einnehmen. Idealer Weise liegt der Neigungswinkel (α) zwischen 20° und 40°.

Der Dübel 10 mit der Druckplatte 13 und dem Übertragungskörper 30 sind aus einem thermoplastischen Kunststoff, beispielsweise durch Spritzgießen hergestellt. Bevorzugt ist der Übertragungskörper 30 zwecks Aufnahme und Übertragung der Drehmomentkräfte aus einem witterungsbeständigen und schlagfesten/eindrehfesten verstärkten oder gefüllten Kunststoff gefertigt.

Die Montage des erfindungsgemäßen mehrteiligen Dämmstoffhalters 1 erfolgt durch das seitliche Einstecken des Spreizelementes 20, beispielsweise einer Schraube 20 mit einem an der dem Schaft 22 abgewandten Seite des Kopfes 21 des Spreizelementes 20 angeformten axial vorstehenden Kamm 23 und einem auf den Schaft 22 des Spreizelementes 20 ausgebildeten Gewinde oder eines entsprechend ausgebildeten Bolzens in den Einsteckschlitz 32s des Übertragungskörpers 30. Hierbei wird der an dem scheibenförmigen Kopf 21 der Schraube bzw. des Bolzens 20 angeformte Kamm 23 in dem Übertragungsbereich 34 für eine drehfeste und zugfeste Verbindung aufgenommen. Durch Andrücken bzw. Hineindrücken der Schraube 20 in den Einsteckbereich 32s, 32, 33 verrastet der Kopf 21 und/oder Schaft 21 der Schraube 20 mit dem Rastelement 40 zu einer festen und drehsicheren Verbindung, so dass ein Herausfallen bzw. Lösen der Schraube 20 aus dem Übertragungskörper 30 verhindert wird. Die so miteinander verbundenen Teile 20, 30 werden partiell in den Dübel 10 eingesetzt. Der Übertragungskörper 30 wird mittels eines ausgewählten Eindrehwerkzeuges, beispielsweise am Außenumfang des Übertragungskörpers 30, in Umdrehungen versetzt, so dass sich der Spreizbereich S des Dübels 10 durch die Schraube aufweitet und der Dübel 10 fest im nicht dargestellten Untergrund verankert wird.

Des Weiteren ist es möglich, anstelle einer Schraube mit Außengewinde z.B. einen Nagel, eine Nagelschraube oder einen Draht ohne Gewinde in den Übertragungskörper zum Einschlagen einzusetzen.

### Bezugszeichen

1 = Dämmstoffhalter
10 = Dübel
11 = Dübelschaft
12 = Durchgang
13 = Druckplatte
14 = Aufnahmeteil
141 = innere konische Dichtfläche von 14
142 = innere Dichtwulst
143 = innere Schneidringdichtfläche
20 = Spreizelement
21 = Kopf von 20
22 = Schaft von 20
23 = Kamm an 21
24 = Anlagefläche
30 = Übertragungskörper
31 = Schaftteil
32s = Einsteckschlitz
32 = Aufnahmeraum
33 = Längsschlitz
34 = Übertragungsbereich
35 = innere umfangsprofilierte Mitnahmeflächen
36 = äußere umfangsprofilierte Mltnahmeflächen
37 = konische Dichtfläche, axial
38 = Dichtwulst, radial
39 = Schneidringdichtfläche
40 = Rastelement
S = Spreizbereich
IW = Innenseitenwand von 30
O = kammfreie Zone
IS = Innenseitenwand von 31
F = Flächen von 32

## Patentansprüche

1. Dämmstoffhalter (1), umfassend einen Dübel (10) mit einem Dübelschaft (11), an dessen einem Ende ein Spreizbereich (S) ausgebildet ist und an dessen anderem Ende eine flanschartige Druckplatte (13) angeformt ist, wobei die flanschartige Druckplatte (13) einen koaxial zur Längsachse (X) ausgebildeten Aufnahmeteil (14) aufweist, und ein zur Aufweitung des Spreizbereiches (S) in den Dübel (10) einführbares Spreizelement (20) mit einem Kopf (21) und einem Schaft (22), und einen Übertragungskörper (30), an dem ein Schaftteil (31) ausgebildet ist,
wobei der Übertragungskörper (30) einen seitlichen T-förmigen Einsteckbereich mit einem Einsteckschlitz (32s) und einem in den Übertragungskörper (30) übergehenden Aufnahmeraum (32) für den Kopf (21) und einem durch den Schaftteil (31) durchgängigen in axialer Richtung verlaufenden Längsschlitz (33) zum Einführen des Spreizelementes (20) enthält,
**dadurch gekennzeichnet, dass**
an der dem Schaft (22) abgewandten Seite des Kopfes (21) des Spreizelementes (20) ein axial vorstehender Kamm (23) angeformt ist, und dass im Inneren des Aufnahmeraumes (32) ein den Kamm (23) aufnehmender quer zur Längsachse X des Übertragungskörpers (30) verlaufender Übertragungsbereich (34) ausgebildet ist zum Zwecke einer kraftschlüssigen und formschlüssigen drehfesten Verbindung zwischen dem Übertragungskörper (30) und dem Spreizelement (20), und
der im Inneren des Aufnahmeraumes (32) quer zur Längsachse X des Übertragungskörpers (30) verlaufende Übertragungsbereich (34) tiefer als die Höhe des axial vorstehenden Kammes (23) ausgebildet ist.

2. Dämmstoffhalter (1) nach Anspruch 1, **dadurch gekennzeichnet, dass** der Übertragungskörper (30) an seinem einen axialen Ende innere und/oder äußere Umfangs-Profilierungen (35, 36) für einen Werkzeugangriff aufweist.

3. Dämmstoffhalter (1) nach einem der Ansprüche 1 bis 2, **dadurch gekennzeichnet, dass** der Übertragungskörper (30) und der Aufnahmeteil (14) im Wesentlichen kegelstumpfförmig ausgebildet sind.

4. Dämmstoffhalter (1) nach einem der Ansprüche 1 bis 3, **dadurch gekennzeichnet, dass** der Übertragungskörper (30) oberhalb der kammfreien Zone (O) eine sich axial erstreckende konische Dichtfläche (37) aufweist, und dass an dem Aufnahmeteil (14) eine innere konische Dichtfläche (141) ausgebildet ist.

5. Dämmstoffhalter (1) nach einem der Ansprüche 1 bis 4, **dadurch gekennzeichnet, dass** auf der konischen Dichtfläche (37) des Übertragungskörpers (30) eine radial verlaufende Dichtwulst (38) oder eine radial verlaufende Schneidringdichtfläche (39) ausgebildet ist.

6. Dämmstoffhalter nach einem der Ansprüche 1 bis 4, **dadurch gekennzeichnet, dass** auf der inneren konischen Dichtfläche (141) des Aufnahmeteiles (14) eine radial verlaufende Dichtwulst (142) oder eine radial verlaufende Schneidringdichtfläche (143) vorgesehen ist.

7. Dämmstoffhalter (1) nach einem der Ansprüche 1 bis 6, **dadurch gekennzeichnet, dass** der Übertragungskörper (30) mit seiner konischen Dichtfläche (37) an der inneren Dichtfläche (141) des Aufnahmeteiles formschlüssig anliegt.

8. Dämmstoffhalter (1) nach einem der Ansprüche 1 bis 7, **dadurch gekennzeichnet, dass** die konische Dichtfläche (37) des Übertragungskörpers (30) und die innere konische Dichtfläche (141) des Aufnahmeteiles (14) einen identischen konischen Neigungswinkel (α) in Bezug auf die X-Achse aufweisen.

9. Dämmstoffhalter (1) nach Anspruch 8, **dadurch gekennzeichnet, dass** der Neigungswinkel (α) zwischen 20° und 40° beträgt.

10. Dämmstoffhalter (1) nach einem der Ansprüche 1 bis 9, **dadurch gekennzeichnet, dass** an der Innenseitenwand (IW) des Übertragungskörpers (30) im Bereich des Einsteckschlitzes (32) und/oder an der Innenseitenwand (IS) des Schaftteiles (31) mindestens ein nach innen vorstehendes sich in axialer Richtung erstreckendes Rastelement (40) ausgebildet ist, und dass das Rastelement (40) an der Innenseitenwand (IW) des Übertragungskörpers (30) von den inneren Flächen F des Aufnahmeraumes (32) begrenzt ist.

11. Dämmstoffhalter (1) nach einem der Ansprüche 1 bis 10, **dadurch gekennzeichnet, dass** der Kopf (21) des Spreizelementes (20) scheibenförmig ausgebildet ist.

## Claims

1. Insulating material fixing means (1), comprising a dowel (10) with a dowel shaft (11), which at one end thereof is formed with an expansion area (S) while at the other end thereof a flange-like pressure plate (13) is mounted, wherein said flange-like pressure plate (13) has a receiving part (14) being formed coaxially with respect to the longitudinal axis (X), and an expansion element (20) with a head (21) and a shaft (22) which can be inserted into the dowel (10) in order to widen the expansion area (S), and a transmission body (30) which has a shaft part (31) formed thereon,
wherein said transmission body (30) comprises a lateral T-shaped insertion area with an insertion slot (32s) and a receiving space (32) for the head (21) passing into the transmission body (30), and a longitudinal slot (33) passing through the shaft part (31) and extending in axial direction for insertion of the expansion element (20),
**characterized in that**
an axially projecting ridge (23) is formed on the side of the head (21) of the expansion element (20) which faces away from the shaft (22), and a transmission area (34) receiving the ridge (23) and extending transverse to the longitudinal axis X of the transmission body (30) is formed in the interior of the receiving space (32) for the purpose of enabling a force-fitting and positive-fitting rotationally fixed connection between the transmission body (30) and the expansion element (20), and
the transmission area (34) extending in the interior of the receiving space (32) transverse to the longitudinal axis X of the transmission body (30) is configured so as to be positioned at a lower height than the height of the axially projecting ridge (23).

2. Insulating material fixing means (1) according to claim 1,
**characterized in that** the transmission body (30) at one of the axial ends thereof features inner and/or outer peripheral profiles (35, 36) for a tool engagement portion.

3. Insulating material fixing means (1) according to any of claims 1 to 2, **characterized in that** the transmission body (30) and the receiving part (14) have a substantially frustoconical shape.

4. Insulating material fixing means (1) according to any of claims 1 to 3, **characterized in that** the transmission body (30) has an axially extending conical sealing surface (37) above the ridge-free zone (O), and an inner conical sealing surface (141) is formed at the receiving part (14).

5. Insulating material fixing means (1) according to any of claims 1 to 4, **characterized in that** a radially extending sealing bead (38) or a radially extending cutting ring sealing surface (39) is formed on the conical sealing surface (37) of the transmission body (30).

6. Insulating material fixing means (1) according to any of claims 1 to 4, **characterized in that** a radially extending sealing bead (142) or a radially extending cutting ring sealing surface (143) is provided on the inner conical sealing surface (141) of the receiving part (14).

7. Insulating material fixing means (1) according to any of claims 1 to 6, **characterized in that** the transmission body (30) with the conical sealing surface (37) thereof rests against the inner sealing surface (141) of the receiving part in a positive-fitting manner.

8. Insulating material fixing means (1) according to any of claims 1 to 7, **characterized in that** the conical sealing surface (37) of the transmission body (30) and the inner conical sealing surface (141) of the receiving part (14) have an identical conical inclination angle (α) with respect to the X-axis.

9. Insulating material fixing means (1) according to claim 8,
**characterized in that** the inclination angle (α) is between 20° and 40°.

10. Insulating material fixing means (1) according to any of claims 1 to 9, **characterized in that** at least one inwardly projecting and axially extending latching element (40) is formed on the inner side wall (IW) of the transmission body (30) in the region of the insertion slot (32) and/or on the inner side wall (IS) of the shaft part (31), and the latching element (40) on the inner side wall (IW) of the transmission body (30) is limited by the inner faces F of the receiving space (32).

11. Insulating material fixing means (1) according to any of claims 1 to 10, **characterized in that** the head (21) of the expansion element (20) is embodied with a disc-shape.

## Revendications

1. Moyen de fixation pour matériau isolant (1), comprenant une cheville (10) avec une tige de cheville (11), à une extrémité de laquelle étant formée une zone d'expansion (S) et à l'autre extrémité de laquelle étant montée une plaque de pression (13) ressemblant à une collerette, dans lequel ladite plaque de pression (13) ressemblant à une collerette présente une partie de réception (14) étant formée coaxialement par rapport à l'axe longitudinal (X), et un élément d'expansion (20) avec une tête (21) et une tige (22) qui peut être inséré dans la cheville (10) afin d'élargir la zone d'expansion (S), et un corps de transmission (30) ayant une partie de tige (31) formée au niveau de celui-ci,
dans lequel le corps de transmission (30) comprend une zone d'insertion latérale sous forme de T avec une fente d'insertion (32s) et un espace de réception (32) pour la tête (21) passant dans le corps de transmission (30), et une fente longitudinale (33) s'étendant à travers la partie de tige (31) en direction axiale pour l'insertion de l'élément d'expansion (20), **caractérisé en ce qu'**
une arête (23) faisant saillie axialement est formée sur le côté de la tête (21) de l'élément d'expansion (20) étant détourné du tige (22), et une zone des transmission (34) recevant l'arête (23) et passant transversalement par rapport à l'axe longitudinal X du corps de transmission (30) est formée à l'intérieur de l'espace de réception (32) afin de réaliser une connexion solidaire en rotation par complémentarité de forme et de force entre le corps de transmission (30) et l'élément d'expansion (20),
la zone de transmission (34) s'étendant à l'intérieur de l'espace de réception (32) transversalement par rapport à l'axe longitudinal X du corps de transmission (30) est conçue de manière à ce que celle-ci soit positionnée à une hauteur plus basse que la hauteur de l'arête (23) faisant saillie axialement.

2. Moyen de fixation pour matériau isolant (1) selon la revendication 1, **caractérisé en ce que** le corps de transmission (30) à une de ses extrémités axiales présente des profils périphériques (35, 36) intérieurs et/ou extérieurs pour une section de prise d'outil.

3. Moyen de fixation pour matériau isolant (1) selon l'une quelconque des revendications 1 à 2, **caractérisé en ce que** le corps de transmission (30) et la partie de réception (14) présentent une forme sensiblement tronconique.

4. Moyen de fixation pour matériau isolant (1) selon l'une quelconque des revendications 1 à 3, **caractérisé en ce que** le corps de transmission (30) présente une surface d'étanchéité conique (37) s'étendant axialement au-dessus de la zone libre d'arêtes (O) et une surface d'étanchéité intérieure conique (141) est formée au niveau de la partie de réception (14).

5. Moyen de fixation pour matériau isolant (1) selon l'une quelconque des revendications 1 à 4, **caractérisé en ce qu'**un bourrelet d'étanchéité (38) s'étendant radialement ou une surface d'étanchéité à bague coupante (39) s'étendant radialement est formée sur la surface d'étanchéité conique (37) du corps de transmission (30).

6. Moyen de fixation pour matériau isolant (1) selon l'une quelconque des revendications 1 à 4, **caractérisé en ce qu'**un bourrelet d'étanchéité (142) s'étendant radialement ou une surface d'étanchéité à bague coupante (143) s'étendant radialement est pourvue sur la surface d'étanchéité intérieure conique (141) de la partie de réception (14).

7. Moyen de fixation pour matériau isolant (1) selon l'une quelconque des revendications 1 à 6, **caractérisé en ce que** le corps de transmission (30) avec sa surface d'étanchéité conique (37) repose contre la surface d'étanchéité intérieure (141) de la partie de réception par complémentarité de forme.

8. Moyen de fixation pour matériau isolant (1) selon l'une quelconque des revendications 1 à 7, **caractérisé en ce que** la surface d'étanchéité conique (37) du corps de transmission (30) et la surface d'étanchéité intérieure conique (141) de la partie de réception (14) ont un angle d'inclinaison conique (α) identique par rapport à l'axe X.

9. Moyen de fixation pour matériau isolant (1) selon la revendication 8, **caractérisé en ce que** l'angle d'inclinaison (α) est compris entre 20° et 40°.

10. Moyen de fixation pour matériau isolant (1) selon l'une quelconque des revendications 1 à 9, **caractérisé en ce qu'**au moins un élément de verrouillage (40) faisant saillie vers l'intérieur et s'étendant axialement est formé sur la paroi latérale intérieure (IW) du corps de transmission (30) dans la région de la fente d'insertion (32) et/ou sur la paroi latérale intérieure (IS) de la partie de tige (31), et l'élément de verrouillage (40) sur la paroi latérale intérieure (IW) du corps de transmission (30) est limité par les faces intérieures F de l'espace de réception (32).

11. Moyen de fixation pour matériau isolant (1) selon l'une quelconque des revendications 1 à 10, **caractérisé en ce que** la tête (21) de l'élément d'expansion (20) est réalisée sous forme d'un disque.
